# EUROPÄISCHE PATENTANMELDUNG

(11) **EP 2 662 168 A1**
(43) Veröffentlichungstag der Anmeldung: **13.11.2013**
(21) Anmeldenummer: 12167121.8
(22) Anmeldetag: 08.05.2012
(51) Int. Cl.: B22F 7/06, C22C 33/02, B22F 7/08, B23D 61/12

(54) **Sägeblatt mit einem pulvermetallurgisch hergestellten Schneidteil**

(71) Anmelder: WIKUS-Sägenfabrik Wilhelm H. Kullmann GmbH & Co. KG, 34286 Spangenberg (DE)
(72) Erfinder: Kullmann, Jörg Dr., 34286 Spangenberg (DE); Kellezi, Gert, 8700 Leoben (AT); Caliskanoglu, Devrim, 35390 Giebben (DE)
(74) Vertreter: Rehberg Hüppe + Partner

(57) **Zusammenfassung**

Ein Sägeblatt (1) weist einen Zahntragekörper(2) und eine Mehrzahl von an dem Zahntragekörper (2) angeordneten Zähnen (3) auf. Die Zähne (3) weisen jeweils eine Zahnspitze (8) mit einer Schneide (9) auf. Die Schneide (9) und zumindest ein weiterer Teil der Zahnspitze (8) der Zähne (3) bestehen aus einer pulvermetallurgisch hergestellten und grobkorngeglühten Stahllegierung.

## Beschreibung

### TECHNISCHES GEBIET DER ERFINDUNG

Die Erfindung betrifft ein Sägeblatt mit einem Zahntragekörper und einer Mehrzahl von an dem Zahntragekörper angeordneten Zähnen, die jeweils eine Zahnspitze mit einer Schneide aufweisen.

Derartige Sägeblätter können insbesondere als langgestrecktes Sägeband mit einer linearen Anordnung der Zähne hintereinander oder auch als Bügelsägeblatt, Kreissägeblatt, Maschinensägeblatt, Säbelsägeblatt oder Stichsägeblatt ausgebildet sein. Der Zahntragekörper und die Zahnbasis bestehen bevorzugt aus Metall, insbesondere aus Vergütungsstahl. Die Schneide und zumindest ein weiterer Teil der Zahnspitze der Zähne besteht ebenfalls aus Metall, insbesondere aus legiertem Werkzeugstahl bzw. Schnellarbeitsstahl, wobei dieses Material härter ist als das Material des Zahntragekörpers, wodurch sich das Sägeblatt insgesamt besonders gut zum Sägen von Metallwerkstoffen eignet. Es ist jedoch auch möglich, andere Werkstoffe - insbesondere Holz - mit derartigen Sägeblättern zu sägen.

### STAND DER TECHNIK

Ein Sägeblatt mit einem Zahntragekörper und einer Mehrzahl von an dem Zahntragekörper angeordneten Zähnen ist aus der deutschen Patentanmeldung DE 42 00 423 A1 bekannt. Dieses Sägeblatt ist auch unter der Marke "FUTURA" der Anmelderin bekannt. Die Zähne weisen jeweils eine Zahnspitze mit einer Schneide auf und sind in einer Höhen- und Breitenstufung in einer Gruppe angeordnet, die sich entlang des Zahntragekörpers wiederholt.

Ein Bimetall-Sägeblatt ist aus der österreichischen Patentanmeldung AT 507 956 A1 bekannt. Das Sägeblatt weist einen Trägerbandabschnitt aus einem Vergütungsstahl und einen darauf angeordneten und durch Schweißen befestigten Kantendrahtabschnitt aus einem Werkzeugstahl, insbesondere einem Schnellarbeitsstahl, auf.

### AUFGABE DER ERFINDUNG

Der Erfindung liegt die Aufgabe zugrunde, ein Sägeblatt mit einer hohen Zerspanungsleistung und gleichzeitig einer hohen Verschleißbeständigkeit bereitzustellen.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Das Sägeblatt weist einen Zahntragekörper und eine Mehrzahl von an dem Zahntragekörper angeordneten Zähnen auf. Die Zähne weisen jeweils eine Zahnspitze mit einer Schneide auf. Die Schneide und zumindest ein weiterer Teil der Zahnspitze der Zähne bestehen aus einer pulvermetallurgisch hergestellten und grobkorngeglühten Stahllegierung.

### Definitionen

**Sägeblatt:** Unter einem Sägeblatt wird in dieser Anmeldung ein langgestrecktes Sägeband, ein Bügelsägeblatt, ein Kreissägeblatt oder eine andere mögliche Bauform eines Sägeblatts verstanden.

**Zahntragekörper:** Unter dem Zahntragekörper wird in dieser Anmeldung der Teil des Sägeblatts verstanden, an dem die Zähne des Sägeblatts angeordnet sind. Oftmals wird in diesem Zusammenhang auch von dem "Grundkörper" des Sägeblatts gesprochen. Der Begriff "Zahntragekörper" soll jedoch besser zum Ausdruck bringen, dass es sich um den Teil des Sägeblatts handelt, der selbst nicht als Zahn bezeichnet werden kann, an dem aber die Zähne angeordnet sind. Dabei ist zu beachten, dass hier Unterschiede zwischen der funktionsmäßigen und der materialmäßigen Unterscheidung zwischen Zahntragekörper und Zähnen bestehen. Funktionsmäßig beginnt der Zahn mit seiner Zahnbasis im Bereich des Zahngrunds. Diese Zahnbasis besteht jedoch oftmals aus demselben Werkstoff wie der Zahntragekörper und ist einstückig mit diesem ausgebildet. Anders gesagt erfüllt ein Teil dieses Werkstoffs die Funktion des Zahntragekörpers und ein anderer Teil die Funktion der Zahnbasis und somit des Zahns. Die materialmäßige Trennung liegt dann erst weiter abgewandt vom Zahntragekörper im Bereich der Zahnspitze vor.

**Pulvermetallurgische Herstellung:** Unter einer pulvermetallurgischen Herstellung ist die Herstellung von Metallpulvern und deren Weiterverarbeitung zu verstehen. Üblicherweise weist diese mindestens drei Teilbereiche auf, nämlich die Herstellung von Metallpulver mit relativ feinen Carbidphasen, die Formgebung und das Sintern.

**Grobkornglühen:** Unter dem Grobkornglühen wird in dieser Anmeldung eine bestimmte Wärmebehandlung der Stahllegierung verstanden. Grobkornglühen wird auch als Hochglühen bezeichnet und dient zum Erhöhen der Korngröße und der Homogenisierung der Matrix in Metalllegierungen durch Erwärmung über eine vergleichsweise lange Haltezeit.

**Carbide:** Carbide sind eine Stoffgruppe binärer chemischer Verbindungen aus einem Element E und Kohlenstoff C mit der allgemeinen Formel EₓC_{y}.

**Metallartige Carbide:** Bei metallartigen Carbiden handelt es sich um Carbide, bei denen das Element E ein Metall M ist. Die metallartigen Carbiden können auch mehrere unterschiedliche Metalle enthalten.

### Hintergrund

Hochlegierte ledeburitische Werkzeugstähle erstarren in gegossenen Blöcken unter Bildung zumeist vergleichsweise grober Carbide und Carbidanhäufungen, welche unter Umständen im verformten Werkstoff in Abhängigkeit von der Verformungsrichtung ausgeprägte Carbidzeilen bilden. Solche Werkstoffe weisen anisotrope mechanische Eigenschaften und ein richtungsabhängig unterschiedliches Verschleißverhalten auf. Solche Werkstoffe erfordern zumeist ein vergleichsweise aufwändiges Vergütungsverfahren und verschleißen insbesondere an den hoch beanspruchten Zahnspitzen eines Sägeblatts zumeist durch Kantenausbrüche aufgrund einer Materialermüdung und/oder einer Rissbildung bei alternierender Beanspruchung. Kantenausbrüche können auch durch große Carbide entstehen, die sich an der Schneidkante befinden.

Eine solche Materialermüdung kann durch Verwendung pulvermetallurgisch hergestellter Stahllegierungen zwar verringert werden. Dabei hat sich aber gezeigt, dass keine wesentliche Standzeiterhöhung im Betrieb erreichbar ist. Diese Werkstoffe sind zwar weitgehend isotrop und gut bearbeitbar, weisen jedoch nur ein eingeschränktes Härtepotential auf. Unter dem Härtepotential ist dabei das Ausmaß des Härteanstiegs beim Anlassen eines aus dem Austenitgefügebereichs des martensitisch umgewandelten Werkstoffs mit Restaustenit zu verstehen. Darüber hinaus sind die Carbide in solchen Stahllegierungen verfahrensbedingt sehr klein und von globularer Form. Sie sind daher nicht so verschleißbeständig.

### Weitere Beschreibung

Das neue Sägeblatt besteht also im Bereich der Schneiden der Zähne und zumindest eines weiteren Teils der Zahnspitzen der Zähne aus einer in besonderer Weise hergestellten Stahllegierung.

Die Stahllegierung wird zunächst pulvermetallurgisch hergestellt. Durch die pulvermetallurgische Herstellung wird im Vergleich zu einer schmelzmetallurgischen Herstellung erreicht, dass die Anzahl der metallartigen Carbide erhöht und deren durchschnittliche Größe reduziert wird. Die Carbide besitzen dabei verfahrensbedingt eine globulare bzw. runde Form. Dieses Material ist dann vergleichsweise zäh, besitzt aber noch nicht die gewünschte Verschleißbeständigkeit.

Durch das zusätzliche anschließende Grobkornglühen wird nun die Anzahl der Carbide wieder reduziert und deren durchschnittliche Größe erhöht. Durch die Glühung entstehen durch Koagulation eher "blockige" Carbide. Erreicht wird eine Anzahl und Größe der metallartigen Carbide, die die ansonsten widerstreitenden Merkmale einer hohen Zähigkeit und einer hohen Verschleißbeständigkeit in ein ausgewogenes Verhältnis bringt. Durch diese besondere Behandlung des Werkstoffs wird nicht nur eine erhöhte durchschnittliche Carbidphasengröße, sondern auch eine erhöhte Homogenität der Matrix erreicht. Derartige vergleichsweise große Carbide bleiben auch bei groben abrasiven Beanspruchungen im Gefügeverband erhalten, da auch die diese Carbide enthaltende Matrix durch das Grobkornglühen vorteilhafte Eigenschaften erhalten hat. Die eher "blockigen" Carbide leisten eine bessere Schneidarbeit und sind verschleißbeständiger.

Durch diese neue Beschaffenheit zumindest eines Teils der Zahnspitzen der Zähne wird ein gesteigertes Härtepotential bei verbesserter Verschleißbeständigkeit erreicht. Durch die verbesserter Verschleißbeständigkeit wird eine Bruchgefahr im Bereich der Schneide verringert. Dadurch weist das neue Sägeblatt eine wesentlich erhöhte Schneidleistung auf.

Bei dem Material der Stahllegierung kann es sich insbesondere um einen Werkzeugstahl handeln. Zu den Werkzeugstählen zählen bekanntlich Kaltarbeitsstähle, Warmarbeitsstähle und Schnellarbeitsstähle. Bevorzugt wird ein Schnellarbeitsstahl verwendet. Es kann sich z. B. um einen ledeburitischen Werkzeugstahl handeln.

Die Stahllegierung weist bevorzugt metallartige Carbide mit einem durchschnittlichen Durchmesser von mindestens 2,8 µm auf. Dieser durchschnittliche Durchmesser der Carbide ist also kleiner als bei einem schmelzmetallurgisch hergestellten Werkstoff, der typischerweise Carbide mit einem durchschnittlichen Durchmesser von etwa 4 bis 5 µm aufweist. Er ist aber größer als der durchschnittliche Durchmesser metallartiger Carbide von etwa 2 µm in üblichen pulvermetallurgisch hergestellten Werkstoffen. Bei einer Erhöhung der Korngröße der Carbide ergibt sich eine Erhöhung der Verschleißbeständigkeit bei einer gleichzeitigen Reduzierung der Zähigkeit. Bei einer Reduzierung der Korngröße der Carbide ergibt sich eine Erhöhung der Zähigkeit bei einer gleichzeitigen Reduzierung der Verschleißbeständigkeit.

Bei den metallartigen Carbiden handelt es sich insbesondere um M₆C und MC. Der Carbidphasenanteil an M₆C-Carbiden und MC-Carbiden kann dabei zusammen mindestens etwa 7 Volumenprozent des Gefüges der Stahllegierung ausmachen. Das Gefüge weist dabei eine Matrix mit den in dieser enthaltenen Carbiden auf. Die Matrix kann dabei Carbidphasen aufweisen, die zwischen etwa 5,5 bis 8,5 Volumenprozent M₆C und zwischen etwa 1,5 und 3,9 Volumenprozent MC-Carbide aufweisen.

Das Grobkornglühen kann bei einer Temperatur von mindestens 1100 °C, aber mindestens 10 °C unterhalb der Schmelztemperatur der Gefügephase der Stahllegierung mit der niedrigsten Schmelztemperatur, erfolgen. Diese Temperatur wird insbesondere über eine Zeitdauer von mindestens etwa 10 Stunden, und vorzugsweise von mindestens 12 Stunden, aufrechterhalten. Dadurch wird die durchschnittliche Carbidphasengröße des Werkstoffs um mindestens etwa 50 %, und vorzugsweise mindestens etwa 65 %, erhöht. Die Oberflächenform der Carbide wird blockiger - d. h. weniger rund - und die Matrix wird homogenisiert.

Anschließend wird die pulvermetallurgisch hergestellte und grobkorngeglühte Stahllegierung vorzugsweise vergütet. Durch das Härten und Anlassen im Rahmen der Vergütung werden die letztendlich gewünschten Materialeigenschaften erreicht. Dabei werden schon bei geringen Härtetemperaturen hohe Anlasswerte erzielt.

Im vergüteten Zustand weist die erfindungsgemäße Stahllegierung dann vorzugsweise eine Härte von mindestens 60 HRC auf. Eine solche Härte bei der gleichzeitig vorhandenen Verschleißbeständigkeit eignet sich besonders gut zum Sägen von Werkstücken aus Metall.

Die Zähne weisen jeweils eine Zahnbasis auf, die an den Zahntragekörper anschließt, wobei die Zahnbasis zumindest teilweise aus demselben Material wie der Zahntragekörper besteht. Zahnbasis und Zahntragekörper sind also funktional als unterschiedliche Teile anzusehen, die jedoch aus demselben Material bestehen und vorzugsweise einstückig ausgebildet sind.

Die Zähne können jeweils im Bereich ihrer Zahnspitze einen Trägerbandabschnitt und einen darauf angeordneten Kantendrahtabschnitt aufweisen. Der Kantendrahtabschnitt besteht dann aus der pulvermetallurgisch hergestellten und grobkorngeglühten Stahllegierung und bildet das Schneidteil. Bei einer solchen Ausbildung spricht man von einem Bimetall-Sägeblatt.

Der Kantendrahtabschnitt kann zusatzwerkstofffrei mit dem Trägerbandabschnitt verbunden sein. Dies erfolgt insbesondere durch Schweißen und vorzugsweise durch Laserstrahlschweißen oder Elektronenstrahlschweißen.

Anstelle der Ausbildung als Bimetall-Sägeblatt kann das neue Sägeblatt auch als ein Sägeblatt mit so genannten Schneidstoffeinsätzen ausgebildet sein. In diesem Fall weisen die Zähne im Bereich ihrer Zahnspitze jeweils einen Einsatz aus der pulvermetallurgisch hergestellten und grobkorngeglühten Stahllegierung auf, der das Schneidteil bildet. Auch diese Einsätze sind vorzugsweise zusatzwerkstofffrei mit der Zahnbasis verbunden, insbesondere durch Schweißen. Sie können aber auch mit einem Zusatzwerkstoff eingelötet sein.

Bei einem Sägeblatt mit Schneidstoffeinsätzen ist es übrigens auch denkbar, die Schneidstoffeinsätze aus einem Werkzeugstahl - insbesondere einem Schnellarbeitsstahl - des Stands der Technik auszubilden, d. h. einer pulvermetallurgisch oder schmelzmetallurgisch hergestellten, aber nicht grobkorngeglühten Stahllegierung. Ein solches Sägeblatt ist aus dem Stand der Technik ebenfalls nicht bekannt.

Die Zähne können in vielen unterschiedlichen Systematiken an dem Zahntragekörper angeordnet sein, insbesondere in sich wiederholenden Gruppen von ungeschränkten Zähnen mit einer Höhen- und Breitenstufung, als teilweise geschränkte Zähne, als Vor- und Nachschneider usw.

Im Folgenden sind einige bevorzugte beispielhafte neue Materialzusammensetzungen angegeben:

### Ausführungsbeispiel 1

Die Stahllegierung kann insbesondere die folgenden Bestandteile aufweisen:
- Kohlenstoff: 0,8 bis 1,4 Gewichtsprozent,
- Chrom: 3,5 bis 5,0 Gewichtsprozent,
- Molybdän: 0,1 bis 10,0 Gewichtsprozent,
- Vanadium: 0,8 bis 10,5 Gewichtsprozent,
- Wolfram: 0,1 bis 10,0 Gewichtsprozent, und
- Cobalt: 1,0 bis 12,0 Gewichtsprozent.

Cobalt fördert dabei die Matrixzähigkeit und die Warmhärte besonders effektiv.

### Ausführungsbeispiel 2

Bei einem weiteren bevorzugten Ausführungsbeispiel der Werkzeugsstahllegierung handelt es sich um einen Kaltarbeitsstahl mit den folgenden Bestandteilen:
- Kohlenstoff: 1,0 bis 3,0 Gewichtsprozent,
- Chrom: 0 bis 12,0 Gewichtsprozent,
- Molybdän: 0,1 bis 5,0 Gewichtsprozent,
- Vanadium: 0,8 bis 10,5 Gewichtsprozent, und
- Wolfram: 0,1 bis 3,0 Gewichtsprozent.

### Ausführungsbeispiel 3

Bei den folgenden Zusammensetzungen handelt es sich um weitere vorteilhafte Zusammensetzungen der Stahllegierung:
- Kohlenstoff: 0,8 bis 1,4 Gewichtsprozent,
- Chrom: 3,5 bis 5,0 Gewichtsprozent,
- Molybdän: 0,1 bis 10,0 Gewichtsprozent,
- Vanadium: 0,8 bis 10,5 Gewichtsprozent,
- Wolfram: 0,1 bis 10,0 Gewichtsprozent, und
- Cobalt: 1,0 bis 12,0 Gewichtsprozent.

### Ausführungsbeispiel 4

Bei den folgenden Zusammensetzungen handelt es sich um weitere vorteilhafte Zusammensetzungen der Stahllegierung:
- Kohlenstoff: 0,9 bis 1,4, vorzugsweise 1,0 bis 1,3 Gewichtsprozent,
- Mangan: 0,15 bis 0,5, vorzugsweise 0,2 bis 0,35 Gewichtsprozent,
- Chrom: 3,0 bis 5,0, vorzugsweise 3,5 bis 4,5 Gewichtsprozent,
- Molybdän: 3,0 bis 10,0 Gewichtsprozent,
- Wolfram: 1,0 bis 10,0 Gewichtsprozent,
- Molybdän + Wolfram/2 (W/2): 6,5 bis 12,0, vorzugsweise 7,0 bis 11,0 Gewichtsprozent,
- Vanadium: 0,9 bis 6,0, vorzugsweise 1,0 bis 4,5 Gewichtsprozent, und
- Cobalt: 7,0 bis 11,0, vorzugsweise 8,0 bis 10,0 Gewichtsprozent.

### Ausführungsbeispiel 5

Bei den folgenden Zusammensetzungen handelt es sich um weitere vorteilhafte Zusammensetzungen der Stahllegierung:
- Kohlenstoff: 0,8 bis 3,0 Gewichtsprozent,
- Chrom: 0 bis 12,0 Gewichtsprozent,
- Molybdän: 0,1 bis 5,0 Gewichtsprozent,
- Vanadium: 0,8 bis 10,5 Gewichtsprozent, und
- Wolfram: 0,1 bis 3,0 Gewichtsprozent.

In allen oberhalb genannten beispielhaften Werkstoffen können weiterhin Silizium, Mangan, Schwefel und/oder Stickstoff enthalten sein. Alternativ oder zusätzlich können auch Nickel, Aluminium, Niob und/oder Titan sowie ggf. Eisen, erschmelzungsbedingte Begleitelemente und Verunreinigungen als Rest enthalten sein.

Diese Werkstoffe können weiterhin einen Gehalt von mindestens einem der folgenden Elemente in der angegebenen Größe aufweist:
- Silizium: 0,1 bis 0,5, vorzugsweise 0,15 bis 0,3 Gewichtsprozent,
- Phosphor: 0 bis 0,03, vorzugsweise maximal 0,02 Gewichtsprozent,
- Schwefel: 0 bis 0,3, vorzugsweise maximal 0,03 Gewichtsprozent, und
- Stickstoff: 0 bis 0,1, vorzugsweise maximal 0,08 Gewichtsprozent.

Der Kohlenstoffgehalt der Matrix kann insbesondere zwischen etwa 0,45 bis 0,75 betragen. Der durchschnittliche Durchmesser der metallartigen Carbide beträgt dabei mindestens 2,8 µm, bevorzugt mindestens 3,2 µm.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Schneide die Rede ist, ist dies so zu verstehen, dass genau eine Schneide, zwei Schneiden oder mehr Schneiden vorhanden sind. Wenn hingegen nur die genaue Anzahl eines Merkmals angegeben werden soll, findet das Adjektiv "genau" vor dem jeweiligen Merkmal Verwendung. Diese Merkmale können durch andere Merkmale ergänzt werden oder die einzigen Merkmale sein, aus denen das jeweilige Erzeugnis besteht.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine ausschnittsweise Seitenansicht eines ersten Ausführungsbeispiels des neuen als Bimetall-Sägeband ausgebildeten Sägeblatts.
- **Fig. 2**: zeigt eine ausschnittsweise Seitenansicht des Sägeblatts gemäß Fig. 1 vor dem Anbringen der Zähne.
- **Fig. 3**: zeigt eine Frontansicht des Sägeblatts gemäß Fig. 2.
- **Fig. 4**: zeigt eine ausschnittsweise Seitenansicht eines zweiten Ausführungsbeispiels des neuen als Sägeband mit Schneidstoffeinsätzen ausgebildeten Sägeblatts.
- **Fig. 5**: zeigt eine ausschnittsweise Seitenansicht eines neuen Sägeblatts mit Schneidstoffeinsätzen vor dem Schleifen.
- **Fig. 6**: zeigt ein Schliffbild eines schmelzmetallurgisch hergestellten Schnellarbeitsstahls des Stands der Technik.
- **Fig. 7**: zeigt ein Schliffbild eines pulvermetallurgisch hergestellten Schnellarbeitsstahls des Stands der Technik.
- **Fig. 8**: zeigt ein Schliffbild eines Schnellarbeitsstahls des Stands der Technik, der pulvermetallurgisch hergestellt wurde im vergüteten Zustand.
- **Fig. 9**: zeigt ein Schliffbild eines ersten Ausführungsbeispiels des neuen Werkstoffs, wobei es sich um einen noch unvergüteten Schnellarbeitsstahl handelt.
- **Fig. 10**: zeigt eine REM-Aufnahme des Werkstoffs gemäß Fig. 9 im vergüteten Zustand.
- **Fig. 11**: zeigt die REM-Aufnahme gemäß Fig. 10, wobei zur besseren Erkennbarkeit der metallartigen Carbide eine erste graphische Nachbearbeitung vorgenommen wurde.
- **Fig. 12**: zeigt die REM-Aufnahme gemäß Fig. 10, wobei zur besseren Erkennbarkeit der metallartigen Carbide eine zweite graphische Nachbearbeitung vorgenommen wurde.
- **Fig. 13**: zeigt ein weiteres Schliffbild des neuen Werkstoffs.

### FIGURENBESCHREIBUNG

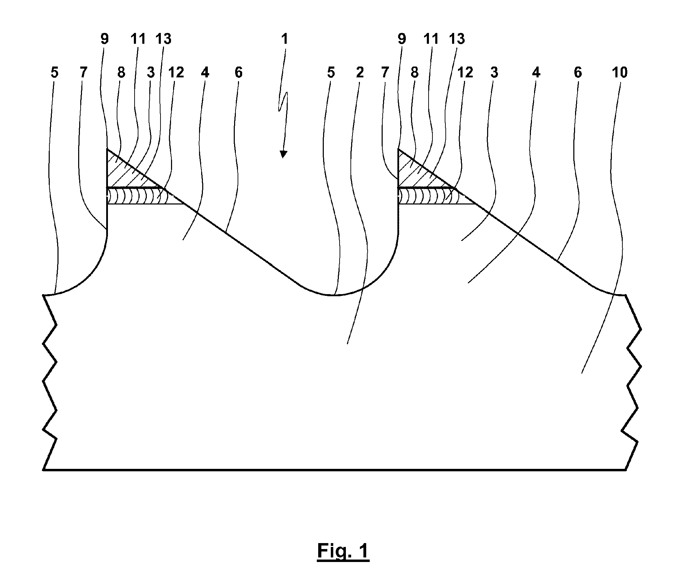

**Fig. 1** zeigt eine Seitenansicht einer ersten beispielhaften Ausführungsform des neuen Sägeblatts 1. Es versteht sich, dass Fig. 1 nur einen Ausschnitt aus dem Sägeblatt 1 zeigt, welches sich in der Darstellung der Fig. 1 sowohl nach links und rechts als auch nach unten weiter erstreckt. In Fig. 1 ist das Sägeblatt 1 als langgestrecktes Sägeband ausgebildet. Bei dem Sägeblatt 1 könnte es sich jedoch auch um ein Kreissägeblatt oder ein weniger langgestrecktes Bügelsägeblatt handeln.

Das Sägeblatt 1 weist einen Zahntragekörper 2 auf, der aus Metall und insbesondere einer Stahllegierung besteht. An dem Zahntragekörper 2 ist eine Mehrzahl von Zähnen 3 angeordnet. Jeder der Zähne 3 weist eine Zahnbasis 4, einen Zahngrund 5, einen Zahnrücken 6, eine Zahnbrust 7 und eine Zahnspitze 8 auf. An der Zahnspitze 8 ist eine Schneide 9 vorhanden.

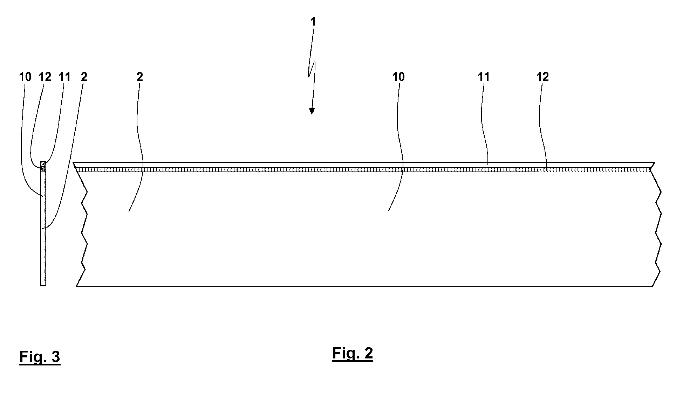

Im vorliegenden Beispiel handelt es sich bei dem Sägeblatt 1 um ein Bimetall-Sägeblatt, welches vor dem Anbringen der Zähne 3 durch Schleifen oder Fräsen so aussieht, wie dies in den **Fig. 2 und 3** dargestellt ist. Ein solches Bimetall-Sägeblatt 1 weist einen Trägerbandabschnitt 10 auf, auf dem ein Kantendrahtabschnitt 11 befestigt ist. Im vorliegenden Fall sind der Trägerbandabschnitt 10 und der Kantendrahtabschnitt 11 zusatzwerkstofffrei durch Schweißen miteinander verbunden, was durch die Schweißzone 12 gezeigt ist. Die Höhe der Schweißzone 12 ist zur besseren Erkennbarkeit übertrieben groß dargestellt. Der Kantendrahtabschnitt 11 bildet dann das eigentliche Schneidteil 13, d. h. den Bereich des Sägeblatts 1, mit dem die Späne von dem zu sägenden Werkstoff im Wesentlichen abgenommen werden.

Die Schneide 9 und zumindest ein weiterer Teil der Zahnspitze 8 der Zähne 3 - im vorliegenden Fall der Kantendrahtabschnitt 11 - besteht aus einem besonderen neuen Werkstoff, nämlich einer pulvermetallurgisch hergestellten und grobkorngeglühten Stahllegierung. Diese neue Stahllegierung weist eine Härte von mindestens 60 HRC bei einer gleichzeitig hervorragenden Zähigkeit auf. Zu den weiteren Besonderheiten des Aufbaus des neuen Werkstoffs wird auf die unterhalb angegebenen Ausführungen verwiesen.

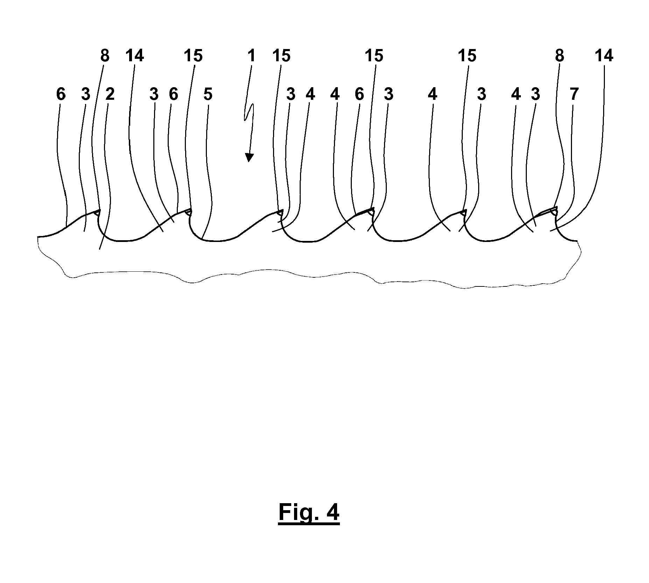

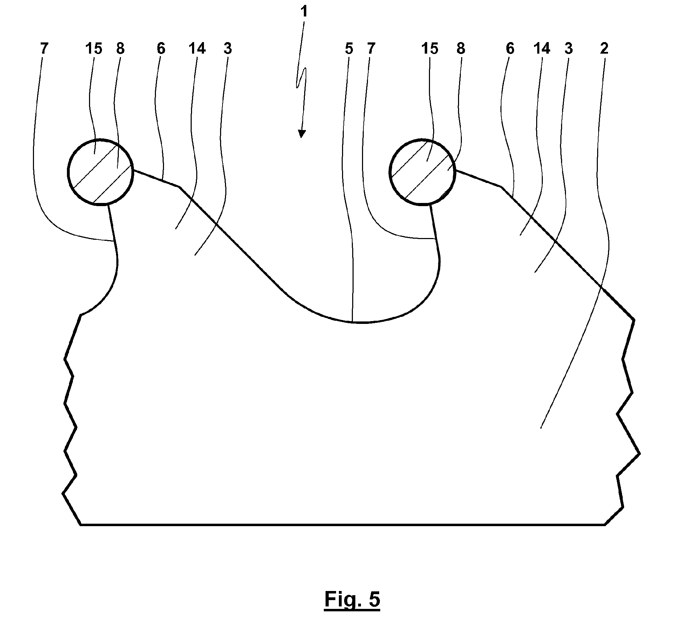

**Fig. 4** **und** **5** zeigen weitere beispielhafte Ausführungsformen des neuen als Sägebands ausgebildeten Sägeblatts 1. Hierbei handelt es sich um kein Bimetall-Sägeblatt, sondern ein Sägeblatt 1 mit so genannten Schneidstoffeinsätzen. Dabei ist der Zahntragekörper 2 einstückig mit der Zahnbasis 4 ausgebildet, so dass Vorsprünge 14 gebildet sind, die aus demselben vergleichsweise weicheren Material bestehen, aus dem auch der Zahntragekörper 2 besteht. An diesen Vorsprüngen 14 sind härtere Einsätze 15 befestigt, die aus der neuen pulvermetallurgisch hergestellten und grobkorngeglühten Stahllegierung bestehen. Diese Einsätze 15 werden in der in Fig. 5 dargestellten Form - oder auch in einer anderen Form (z. B. rechteckig) - an den Vorsprüngen 14 befestigt und dann durch Schleifen in die in Fig. 4 dargestellte Form gebracht, so dass sie eine Schneide 9 aufweisen und das Schneidteil 13 bilden. Die Einsätze 15 können durch Schweißen, Löten, Verschrauben oder in anderer geeigneter Weise mit den Vorsprüngen 14 verbunden sein.

Zur besseren Erläuterung der Unterschiede des neuen Werkstoffs von den im Stand der Technik bekannten Werkstoffen wird im Folgenden zunächst der Stand der Technik erläutert.

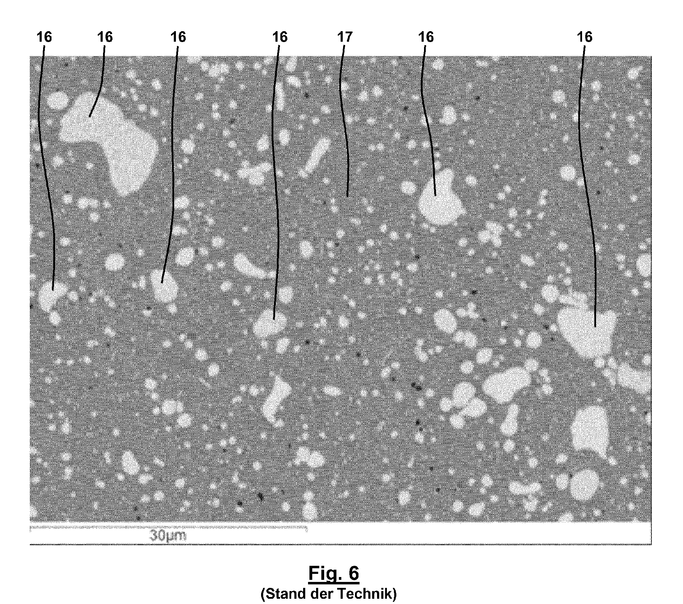

**Fig. 6** zeigt dabei ein Schliffbild eines konventionell schmelzmetallurgisch hergestellten Schnellarbeitsstahls in seinem unvergüteten Zustand. Ein solcher Schnellarbeitsstahl wird auch als M42 bezeichnet. In dem dargestellten weichgeglühten Zustand ist deutlich erkennbar, dass keine homogene Verteilung der metallartigen Carbide 16 in der Matrix 17 vorliegt. Die Größen der Durchmesser und die Form der Carbide 16 schwanken sehr stark. Ein solcher Werkstoff weist eine unbefriedigende Zähigkeit auf.

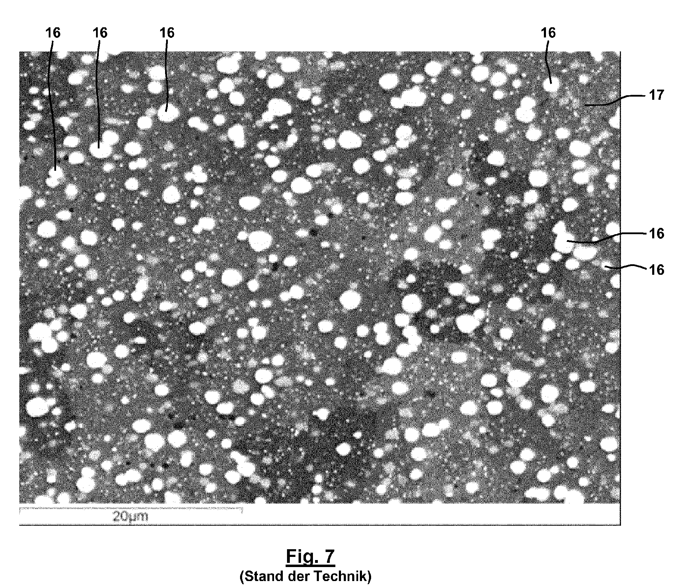

**Fig. 7** zeigt ein entsprechendes Schliffbild eines pulvermetallurgisch hergestellten Schnellarbeitsstahls des Stands der Technik in seinem unvergüteten Zustand. Der durchschnittliche Durchmesser der metallartigen Carbide 16 beträgt etwa 2 µm. Ein solcher Werkstoff weist eine unbefriedigende Härte und Verschleißbeständigkeit auf.

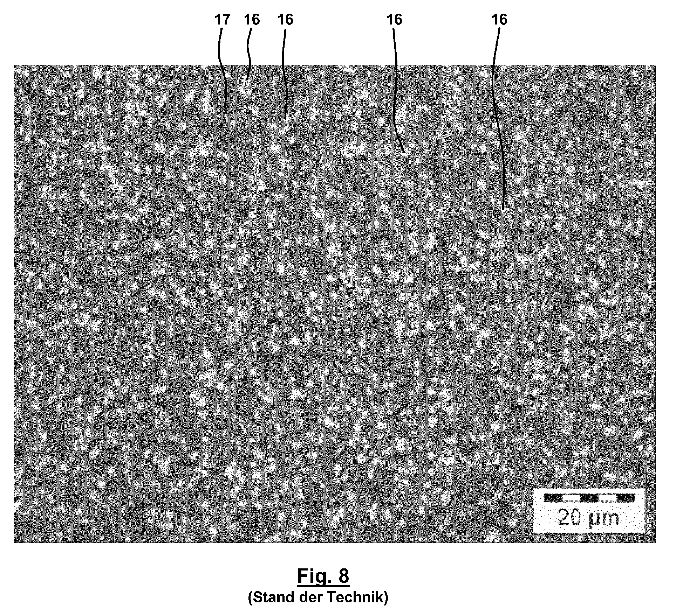

**Fig. 8** zeigt den Schnellarbeitsstahl des Stands der Technik gemäß Fig. 7 nun in seinem vergüteten Zustand. Wie zu erkennen ist, sind die metallartigen Carbide 16 nun homogener verteilt. Sie sind auch kleiner und weisen einen durchschnittlichen Durchmesser von etwa 1,6 µm auf.

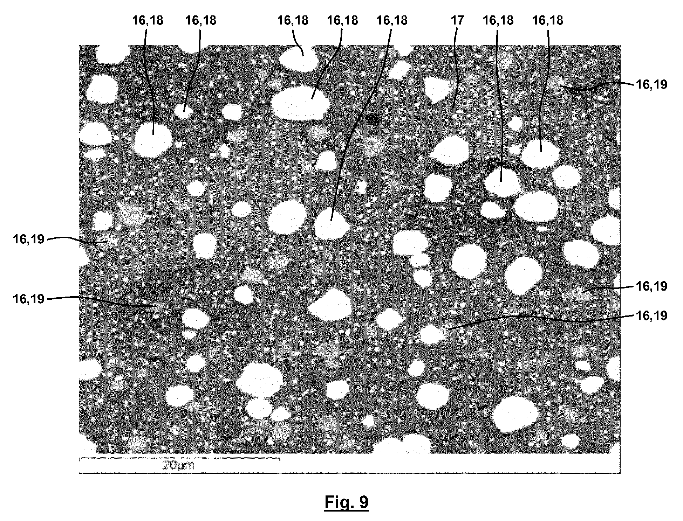

**Fig. 9** zeigt ein Schliffbild eines Ausführungsbeispiels des neuen pulvermetallurgisch hergestellten und grobkorngeglühten Werkstoffs. Es handelt sich hier um einen Schnellarbeitsstahl im weichgeglühten, d. h. unvergüteten Zustand. Der durchschnittliche Durchmesser der metallartigen Carbide 16 beträgt etwa 4 µm. Diese im Vergleich zum Stand der Technik gemäß Fig. 7 vorhandene Vergrößerung wurde durch das Grobkornglühen erreicht. Bei den großen metallartigen Carbiden 16 handelt es sich um M₆C-Carbide 18. Bei den mittelgroßen grauen metallartigen Carbiden 16 handelt es sich um MC-Carbide 19. Aus Übersichtlichkeitsgründen ist nur ein Teil der Carbide 16 mit Bezugszeichen versehen. Dies gilt auch für die folgenden Figuren.

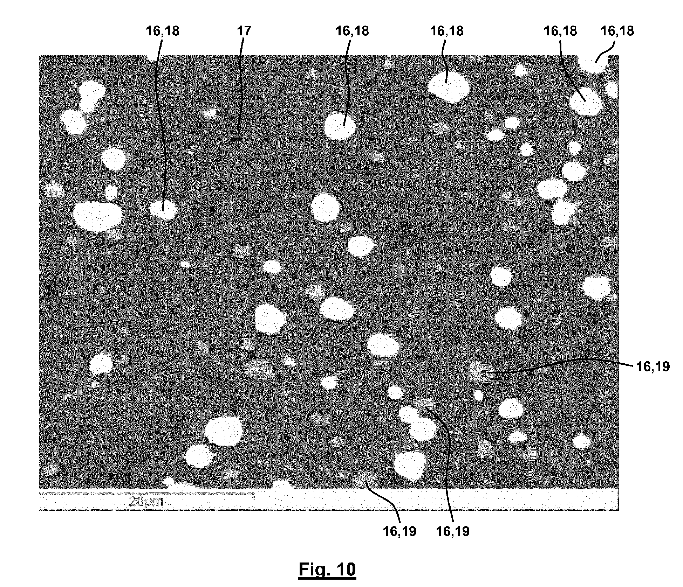

**Fig. 10** zeigt eine REM-Aufnahme des neuen Schnellarbeitsstahls im vergüteten Zustand. In dieser Ansicht sind in der Matrix 17 im Wesentlichen nur die M₆C-Carbide 18 und die MC-Carbide 19 zu erkennen.

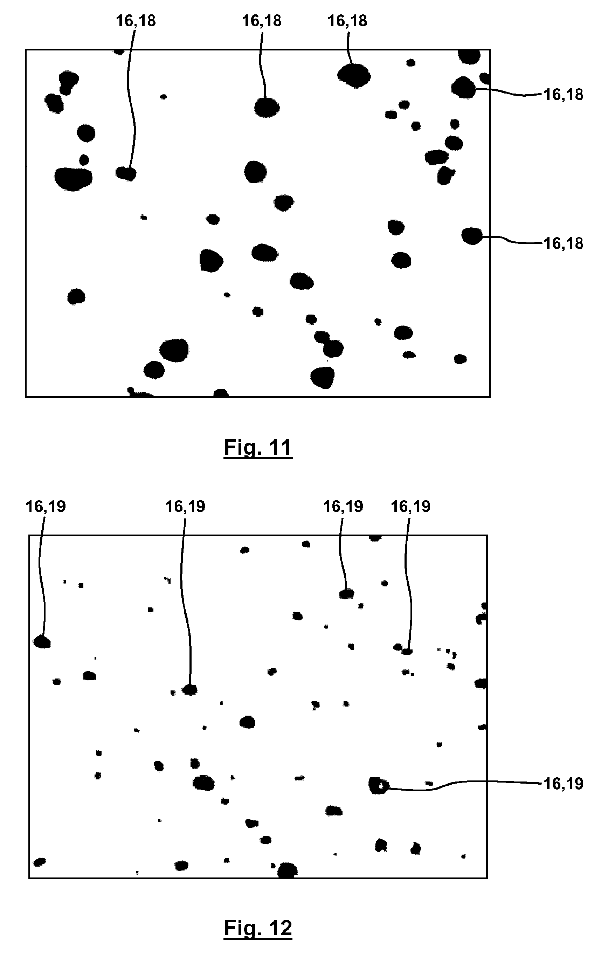

**Fig. 11** zeigt eine weitere REM-Aufnahme des Gefüges des neuen Werkstoffs gemäß Fig. 4, wobei hier eine graphische Nachbearbeitung derart stattgefunden hat, dass die Matrix 17 und die MC-Carbide 19 nicht mehr sichtbar sind. Es sind also nur die M₆C-Carbide 18 als schwarze Bereiche erkennbar.

**Fig. 12** zeigt eine ähnliche graphisch nachbearbeitete Ansicht wie Fig. 11, wobei hier die Nachbearbeitung so durchgeführt wurde, dass hier nun nur die MC-Carbide 19 als schwarze Punkte dargestellt sind. Von diesen sind wiederum nur einige mit Bezugszeichen versehen, es versteht sich aber, dass es sich bei den anderen dargestellten schwarzen Punkten auch um MC-Carbide 19 handelt.

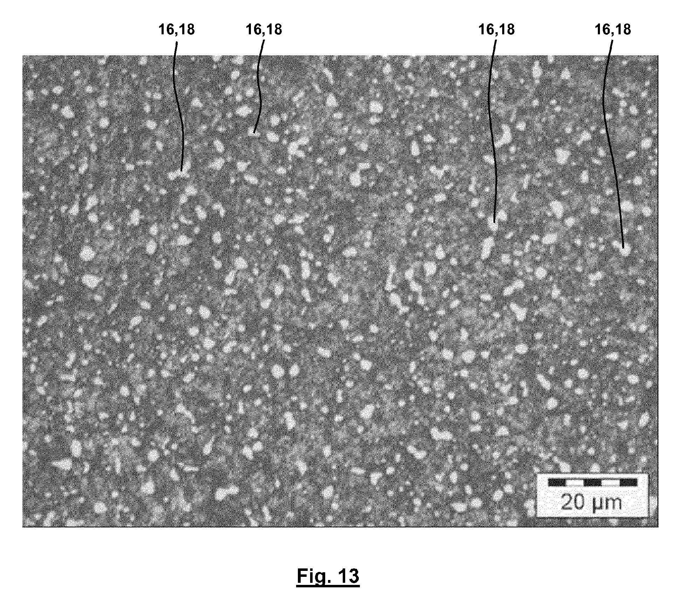

**Fig. 13** zeigt ein Schliffbild des neuen Werkstoffs, wobei es sich wiederum um einen Schnellarbeitsstahl in seinem vergüteten Zustand handelt. In dieser Darstellung ist die homogene Verteilung der metallartigen Carbide 16 gut erkennbar. Der durchschnittliche Durchmesser der metallartigen Carbide 16 beträgt etwa 3,6 µm.

### BEZUGSZEICHENLISTE

- 1: Sägeblatt
- 2: Zahntragekörper
- 3: Zahn
- 4: Zahnbasis
- 5: Zahngrund
- 6: Zahnrücken
- 7: Zahnbrust
- 8: Zahnspitze
- 9: Schneide
- 10: Trägerbandabschnitt
- 11: Kantendrahtabschnitt
- 12: Schweißzone
- 13: Schneidteil
- 14: Vorsprung
- 15: Einsatz
- 16: metallartiges Carbid
- 17: Matrix
- 18: M₆C-Carbid
- 19: MC-Carbid

## Patentansprüche

1. Sägeblatt (1), mit
einem Zahntragekörper (2), und
einer Mehrzahl von an dem Zahntragekörper (2) angeordneten Zähnen (3), wobei die Zähne (3) jeweils eine Zahnspitze (8) mit einer Schneide (9) besitzen, **dadurch gekennzeichnet, dass**
die Schneide (9) und zumindest ein weiterer Teil der Zahnspitze (8) der Zähne (3) aus einer pulvermetallurgisch hergestellten und grobkorngeglühten Stahllegierung bestehen.

2. Sägeblatt (1) nach Anspruch 1, **dadurch gekennzeichnet, dass** es sich bei der Stahllegierung um einen Werkzeugstahl, insbesondere einen Schnellarbeitsstahl, handelt.

3. Sägeblatt (1) nach Anspruch 1 oder 2, **dadurch gekennzeichnet, dass** die Stahllegierung metallartige Carbide (16) mit einem durchschnittlichen Durchmesser von mindestens 2,8 µm aufweist.

4. Sägeblatt (1) nach Anspruch 3, **dadurch gekennzeichnet, dass** es sich bei den metallartigen Carbiden (16) um M₆C-Carbide (18) und MC-Carbide (19) handelt.

5. Sägeblatt (1) nach mindestens einem der vorhergehenden Ansprüche, **dadurch gekennzeichnet, dass** die Stahllegierung in ihrem Gefüge einen Carbidphasenanteil an M₆C-Carbiden (18) und MC-Carbiden (19) von zusammen mindestens 7 Volumenprozent des Gefüges aufweist.

6. Sägeblatt (1) nach mindestens einem der vorhergehenden Ansprüche, **dadurch gekennzeichnet, dass** das Grobkornglühen bei einer Temperatur von mindestens 1100 °C, aber mindestens 10 °C unterhalb der Schmelztemperatur der Gefügephase der Stahllegierung mit der niedrigsten Schmelztemperatur, erfolgt ist.

7. Sägeblatt (1) nach mindestens einem der vorhergehenden Ansprüche, **dadurch gekennzeichnet, dass** die Stahllegierung eine Härte von mindestens 60 HRC besitzt.

8. Sägeblatt (1) nach mindestens einem der vorhergehenden Ansprüche, **dadurch gekennzeichnet, dass** die Zähne (3) jeweils eine Zahnbasis (4) aufweisen, die an den Zahntragekörper (2) anschließt, wobei die Zahnbasis (4) zumindest teilweise aus dem selben Material wie der Zahntragekörper (2) besteht.

9. Sägeblatt (1) nach mindestens einem der vorhergehenden Ansprüche, **dadurch gekennzeichnet, dass** die Zähne (3) jeweils im Bereich ihrer Zahnspitze (8) einen Trägerbandabschnitt (10) und einen darauf angeordneten Kantendrahtabschnitt (11) aufweisen, wobei der Kantendrahtabschnitt (11) aus der pulvermetallurgisch hergestellten und grobkorngeglühten Stahllegierung besteht und das Schneidteil (13) bildet.

10. Sägeblatt (1) nach Anspruch 9, **dadurch gekennzeichnet, dass** der Kantendrahtabschnitt (11) zusatzwerkstofffrei mit dem Trägerbandabschnitt verbunden, insbesondere verschweißt, ist.

11. Sägeblatt (1) nach mindestens einem der Ansprüche 1 bis 8, **dadurch gekennzeichnet, dass** die Zähne (3) im Bereich ihrer Zahnspitze (8) jeweils einen Einsatz aus der pulvermetallurgisch hergestellten und grobkorngeglühten Stahllegierung aufweisen, der das Schneidteil (13) bildet.

12. Sägeblatt (1) nach Anspruch 11, **dadurch gekennzeichnet, dass** die Einsätze (15) zusatzwerkstofffrei mit der Zahnbasis (4) verbunden, insbesondere verschweißt, sind.

13. Sägeblatt (1) nach mindestens einem der vorhergehenden Ansprüche, **dadurch gekennzeichnet, dass** die Stahllegierung die folgenden Bestandteile aufweist:
- Kohlenstoff: 0,8 bis 1,4 Gewichtsprozent,
- Chrom: 3,5 bis 5,0 Gewichtsprozent,
- Molybdän: 0,1 bis 10,0 Gewichtsprozent,
- Vanadium: 0,8 bis 10,5 Gewichtsprozent,
- Wolfram: 0,1 bis 10,0 Gewichtsprozent, und
- Cobalt: 1,0 bis 12,0 Gewichtsprozent.

14. Sägeblatt (1) nach mindestens einem der vorhergehenden Ansprüche, **dadurch gekennzeichnet, dass** das Sägeblatt ein Sägeband, insbesondere zum Sägen von Metall, ist.

15. Sägeblatt (1) nach mindestens einem der vorhergehenden Ansprüche, **dadurch gekennzeichnet, dass** die Stahllegierung metallartige Carbide (16), insbesondere M₆C-Carbide (18) und MC-Carbide (19), aufweist, die in einer Matrix (17) mit einem Kohlenstoffgehalt von zwischen 0,45 und 0,75 Gewichtsprozent enthalten sind.
